(19) Europäisches Patentamt
European Patent Office
Office européen des brevets

(11) **EP 2 806 594 B1**

(12) ## EUROPEAN PATENT SPECIFICATION

(45) Date of publication and mention
of the grant of the patent:
**10.08.2016 Bulletin 2016/32**

(51) Int Cl.:
**H04L 1/20** (2006.01)   **H04L 12/26** (2006.01)
**H04L 1/24** (2006.01)   **H04L 12/24** (2006.01)
**H04L 12/28** (2006.01)

(21) Application number: **13305678.8**

(22) Date of filing: **24.05.2013**

(54) **METHOD AND DEVICE FOR EVALUATING THE STABILITY OF A TELECOMMUNICATION LINE**

VERFAHREN UND VORRICHTUNG ZUR BEWERTUNG DER STABILITÄT EINER TELEKOMMUNIKATIONSLEITUNG

PROCÉDÉ ET DISPOSITIF PERMETTANT D'ÉVALUER LA STABILITÉ D'UNE LIGNE DE TÉLÉCOMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.11.2014 Bulletin 2014/48**

(73) Proprietor: **ALCATEL LUCENT**
**92100 Boulogne-Billancourt (FR)**

(72) Inventors:
• **Dupuis, Nicolas**
**6041 Gosselies (BE)**
• **Drooghaag, Benoît**
**6041 Gosselies (BE)**

(74) Representative: **ALU Antw Patent Attorneys**
**Copernicuslaan 50**
**2018 Antwerpen (BE)**

(56) References cited:
**US-A1- 2006 221 849**

• **F. Fessant ET AL: "A Complete Data Mining process to Manage the QoS of ADSL Services", WAITS 2012, 28 August 2012 (2012-08-28), XP055085359, Retrieved from the Internet: URL:http://www.engpaper.com/data-mining-re search-papers-2012-section-3.htm [retrieved on 2013-10-25]**
• **V. Lemaire ET AL: "Gestion de la QoS des services ADSL à l'aide d'un processus de data mining", 11 Conférence Internationale Francophone sur l'extraction et la gestion des connaissances, 25 January 2011 (2011-01-25), XP055085365, Retrieved from the Internet: URL:http://www2.lirmm.fr/ecai2012/images/s tories/ecai_doc/pdf/workshop/W38_WAITS2012 _Proceedings.pdf#page=7 [retrieved on 2013-10-25]**
• **JOCHEN MAES ET AL: "Autonomous dynamic optimization for digital subscriber line networks", BELL LABS TECHNICAL JOURNAL, WILEY, CA, US, vol. 15, no. 3, 1 December 2010 (2010-12-01), pages 119-129, XP001558908, ISSN: 1089-7089, DOI: 10.1002/BLTJ.20460**
• **JOCHEN MAES ET AL: "Maximizing Digital Subscriber Line Performance", BELL LABS TECHNICAL JOURNAL, WILEY, CA, US, vol. 13, no. 1, 1 March 2008 (2008-03-01), pages 105-116, XP002591690, ISSN: 1089-7089, DOI: 10.1002/BLTJ.20285 [retrieved on 2008-05-15]**

## Description

### Field of the invention

The present invention refers to a method and device evaluating the stability of communication over a telecommunication line. Furthermore, the present invention refers to a monitoring station comprising such a device and a computer program product arranged for carrying out such a method.

### Background

With the increasing deployment of IPTV solutions, video-on-demand offers or triple-play services, both the system performance and the customer support becomes more and more exigent, particularly on digital subscriber lines (DSL). Disturbances or impairments on a digital subscriber line may heavily impact the bit rate on a physical access link provided by the digital subscriber line. A decrease of the bit rate would adversely impact the quality of service of the above-mentioned high bit rate services. Hence, it is of prime importance to be able to remotely diagnose reasons of the disturbances and impairments and take actions to improve the performance of the link, in particular to increase the bit rate. Automatic evaluating the performance of digital subscriber lines and taking action to resolve problems on the physical links provided by these lines is also referred to as Dynamic Line Management (DLM). Applying dynamic line management on a wire line access network helps the operators of the network to gain in service quality as well as to save money and time by not involving human inventions for all and every type of request that may occur in case of disturbances and impairments in the wire line access network.

Moreover, recent technology evolutions in wire line access networks tend to push the bandwidth of the signal used on the digital subscriber lines higher. Major ADSLx technology use frequencies up to about 1.1 MHz. However, the current VDSL2 technology can be applied with bandwidths up to 17 MHz or even 30 MHz. Besides increasing the signal bandwidth, additional measures have been implemented in order to increase the bit rate of digital subscriber lines. As a consequence, digital subscriber lines have become more sensible to disturbances and impairments and more advanced solutions for dynamic line management are needed.

Basically, dynamic line management monitors at least one parameter describing a physical characteristic of one or more digital subscriber lines and thereby dynamically accesses and monitors the stability of the line. A line is considered stable if transmission at a certain bit rate can be maintained during a sufficiently long time interval. Otherwise, the line is considered as unstable. Unstable lines typically have an unacceptable high rate of resyrichronisations or an unacceptable high rate of coding violations or other transmission errors. If dynamic line management detects that a certain line is unstable, the maximum bit rate of that line may be reduced in order to stabilize that line. When monitoring and assessing the stability of a line, the quality of service (e.g. the bit rate under the stability assumption) should be improved and any unneeded decrease of the quality of service seen by the end user should be avoided. In particular, dynamic line management should not operate too conservatively and classify a line as unstable although the user does not feel any practical impacts on the quality of service, because a stabilisation action would typically reduce the bit rate or the latency of the line.

It is known to assess the stability of a line, i.e. to establish if a line is stable or not, by defining stability metrics and thresholds related to these metrics using empirical rules. An exemplary known stability metric is the Mean Time Between Errors (MTBE) or the Mean Time Between Resynchronisations (MTBR). The MTBE describes a mean time during which a line has to wait before the transmission on that line is degraded by corrupted symbols, i.e. by physical layer symbols containing errors that may be caused by impulse noise or other disturbances. The MTBR describes a mean time before the modems of the customer premises equipment (CPE) and an access node of the network (e:g. a DSLAM) resynchronise spontaneously because of a weak quality of the link.

The paper "A Complete Data Mining process to Manage the QoS of ADSL Services", by F. Fessant ET AL, WAITS 2012, 28 August, discloses classifying the ADSL lines into stable, unstable or risky according to reported "tickets" related to the service quality as perceived by the customer.

### Summary

A disadvantage of the known dynamic line management approach based on empirical rules lies in the inaccuracy of the empirical rules. Using the inaccurate empirical rules leads to suboptimal dynamic line management decisions. In particular, a bit rate of a line could be reduced by a stabilisation action although the reduction of the bit rate is actually not needed. In other words, the empirical rules may lead to a too conservative dynamic line management in terms of stability resulting in a comparatively low bit rate on the digital subscriber lines. By contrast, trying to increase the overall bit rate by simply implementing less conservative but still inaccurate empirical rules could harm to the overall stability of the lines and therefore could lead to the DLM not be seen as working well anymore.

Thus, the object of the present invention is to provide a method and device for evaluating and/or estimating the stability of communication over a telecommunication line that allows for assessing the stability of the line more accurately and being more in concordance with the end-user quality of experience, thereby improving the performance (e. g. bit rate or latency) of the line without degrading its stability. Such method and device are characterised according to the accompanying claims. According to an embodiment of the present invention, a method for evaluating the stability of communication over a telecommunication line is provided, the method comprising ascertaining physical line data characterizing a physical characteristic of each line of a fist set of subscriber lines; collecting service quality information describing a quality of a service provided over each line of a second set of subscriber lines; associating the service quality information related to at least one particular line with the physical line data related to the same particular line; and determining a decision criterion from the physical line data with associated service quality information, said decision criterion being determined for deciding to which stability class of a plurality of stability classes the digital subscriber line belongs. In an embodiment the first set and the second set of subscriber lines are identical. In another embodiment, the first set and the second set differ from each other; preferably, the first and the second set have at least some lines in common, i.e. are not disjoint. Ascertaining the physical line data may comprise retrieving the physical line data from at least one network element where the physical line data are created. Typically this network element is a node that is directly connected to the subscriber line, such as an access node or a DSL modem. In some embodiments, the physical line data are collected from multiple network elements (e.g. multiple access nodes) of an access network.

By not only determining the physical line data but also associating the service quality information related to the line with the physical line and data and determining the decision criterion from both the physical line data and the quality information, an accurate decision criterion based on a sound statistical analysis is established. The decision criterion being based on correlating the physical line data with the service quality information, is more accurate than the empirical rules known from the prior art. As a consequence, a less conservative dynamic line management approach can be used without the risk of stability problems.

Note that the service quality information describes the quality of the services (e.g. IP television, video on demand, Internet access, Voice over IP, etc) consumed by the individual users. The service quality information therefore refers to the service quality experienced by the users. In contrast to the service quality information, the physical line data includes physical parameters that are determined by a node connected to the line (e.g. an access node like a DSLAM or customer side termination node like a DSL modem) by measurement or logging and/or counting of events related to transmission errors.

In an embodiment, the method comprises calculating at least one threshold for a stability metric of the line, the at least one threshold depending on the physical line data with associated service quality information. In this, embodiment, the at least one threshold constitutes the decision criterion. The at least one threshold can be compared with the stability metric in order to decide to which stability class the digital subscriber line belongs. However, the present invention is not limited to a threshold-based decision criterion. In another embodiment, the method may generate decision rules that can be processed in order to find the stability class.

In a preferred embodiment, the plurality of stability classes corresponds to three classes: a class of stable lines, a class of risky lines and a class of unstable lines. In another embodiment, the plurality of classes consists of only two classes, e.g. the class of stable lines and the class of unstable lines.

In an embodiment, the method comprises calculating at least one pair of thresholds. In this embodiment, the deciding to which stability class the line belongs may comprises comparing the stability metric with each threshold of the pair of thresholds. However, in another embodiment, the method does not include said comparing but only generates the threshold to be used by a different method or device.

In an embodiment, the service quality information comprises an indication on whether or not the quality of service provided by the respective line is satisfactory. This information may be associated with the physical line data, e.g. by tagging the physical line data with the indication.

In an embodiment, the service quality information is based on customer feedback. The customer feedback may be retrieved from a call centre or contact centre that has asked the customers if they consider the quality of the services provided over their digital subscriber lines as satisfactory or not. However any other suitable approach for collecting the service quality information may be applied, e.g. electronic customer feedback forms may be used.

In an embodiment, the stability metric depends on multiple physical characteristics of the line. The physical characteristics may include a number CV of coding violations within a certain time interval (e.g. one day), a number of errored seconds *ES* or several errored seconds *SES* within the time interval, a number *Resync* of resynchronizations of the two modem circuitries connected to opposite ends of a line within the time interval and/or a number of failed initialisations *FI* of the line within the time interval. In a preferred embodiment, the stability metric is a Mean Time Between Errors (MTBE) or a Mean Time Between Resynchronisations (MTBR)

In an embodiment, the method comprises adapting a calculation rule, e.g. an algorithm or an equation, for calculating the stability metric such that a discriminant measure related to the service quality information is optimized. Any type of discriminant measure may be applied. In a preferred embodiment, the discriminant measure characterizes an overlapping between a first distribution and a second distribution of the stability metric, with the first distribution being determined from pieces of the physical line data associated with service quality information indicating a satisfactory service quality and the second distribution being determined from pieces of the physical line data associated with service quality information indicating an unsatisfactory service quality.

In an embodiment, the calculation rule includes a linear combination of the multiple physical characteristics and said adapting the calculation rule includes computing weight coefficients of the linear combination. Preferably, the method comprises calculating the at least one weight coefficient depending on the physical line data with associated quality information. In this embodiment, the weight coefficients are calculated by optimizing (maximizing or minimizing) the discriminant measure. In other words, the weight coefficient may be determined by a discriminant analysis.

According to another embodiment of the present invention, a device for evaluating the stability of communication over a telecommunication line, is provided, the device being operable, preferably arranged, for determining physical line data characterizing a physical characteristic of each line of a fist set of subscriber lines; collecting service quality information describing a quality of a service provided over each line of a second set of subscriber lines; associating the service quality information related to at least one particular line with the physical line data related to the same particular line; and determining a decision criterion from the physical line data with associated service quality information, said decision criterion being determined for deciding to which stability class of a plurality of stability classes the digital subscriber line belongs.

A device according to a preferred embodiment is operable, preferably programmed, for executing a method for evaluating the stability of communication over a telecommunication line described herein.

According to yet another embodiment of the invention, a monitoring station for evaluating the stability of communication over a telecommunication line is provided, wherein the monitoring station comprises a device for evaluating the stability of communication over a telecommunication line described herein.

According to still another embodiment, a computer program product, preferably a computer readable storage medium is provided, the computer program product comprising a computer program that is programmed for executing a method for evaluating the stability of communication over a telecommunication line described herein. The storage medium may include magnetic memory (e.g. hard disc drives or tapes), optical memory (e.g. optical discs) or semiconductor memory (e.g. Flash memory, ROM, RAM). Moreover, the computer program product may be provided by a server for download over a communication network like the Internet.

**Brief description of the figures**

Exemplary embodiments and further advantages of the present invention are shown in the Figures and described in detail hereinafter.

Figure 1    shows a communication network;
Figure 2    shows a block diagram of a method for evaluating the stability of the communication over telecommunication lines of the network shown in Figure 1;
Figure 3    shows diagrams of statistical distributions of stability metrics;
Figure 4    shows a coordinate transformation;
Figure 5    shows diagrams of statistical distributions of Figure 3 and of statistical distributions with the coordination transformation applied; and
Figure 6    shows diagrams of Figure 5 and thresholds for the stability metrics.

**Description of the embodiments**

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

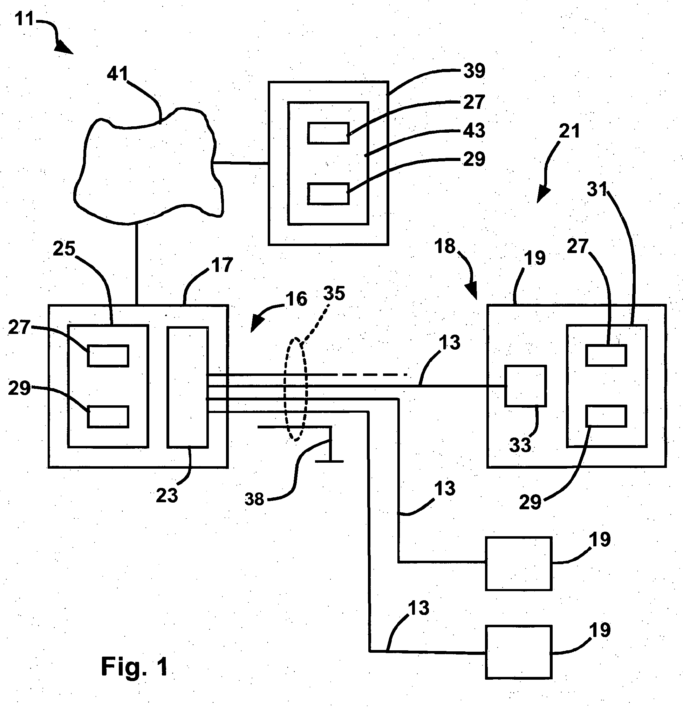

Figure 1 shows a communication network 11 comprising telecommunication lines 13, at least one telecommunication line 13 having a pair of electrical conductors. A first end 16 of the line 13 is connected to a network side termination node of the network 11, further referred to as access node 17, and a second end 18 of the line 13 is connected to a terminal side termination node 19 of the network 11. The terminal side termination node 19 may be part of customer premises equipment (CPE 21) of the network 11.

In the shown embodiment, the telecommunication line 13 is a Digital Subscriber Line (DSL), such as VDSL2, ADSLx or the like. Consequently, the access node 17 may be a DSL Access Multiplexer (DSLAM) or another type of DSL access node. The terminal side termination node 19 may be a DSL modem or include a DSL modem.

The access node 17 has first modem circuitry 23 to which the first end 16 of the lines 13 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the line 13 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least some lines 13 are part of a binder 35 and extend in parallel to each other. The binder 35 may comprise an electrically conductive, preferably metallic, shielding 38 that may be grounded as depicted in Figure 1. Because at least some lines extend in parallel to each other in the binder 35, crosstalk between the lines 13 may occur.

Furthermore, the network 11 may comprise an optional monitoring station 39 connected e. g. via an interconnection network 41 to at least one of the nodes 17, 19 such that the station 39 can communicate with at least one of the nodes 17, 19, preferably the access node 17. The station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server computer, a personal computer, a handheld computer such as a PDA or cell phone, etc.

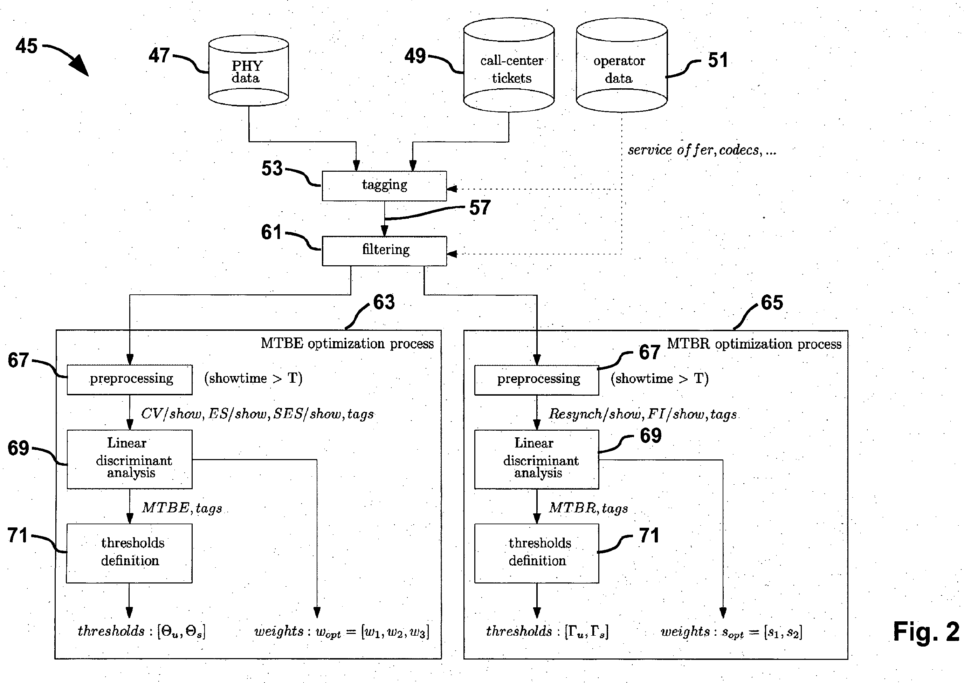

Figure 2 shows a block diagram of a method 45 for evaluating the stability of communication of at least one telecommunication line 13. The method 45 may be executed on the monitoring station 39. To this end, a computer program may be stored in the storage element 29 of the third controller 43. The computer program is programmed for executing the method 45 when run by the processor 27 of the third controller 43. However, the method 45 may also be executed on a different network element of the network 11, e. g. on the access node 17 and the program may be stored on the storage element 29 of the second controller 25.

The method 45 comprises ascertaining physical line data 47. The physical line data 47 may comprise any value describing a physical characteristic of the line such as rate of coding violations $CV$, a number of error seconds $ES$ within a certain time interval, a number of several errored seconds $SES$, the total show time $showtime$ during the time interval, a number $Resync$ of spontaneous resynchronisations within the certain time interval and/or a number of failed initialisations FI of a certain line within the time interval. The physical line data 47 may be retrieved from a network element - such as an access node 17 or the customer side termination node 19 - that is connected directly to a line 13. Preferably, the method 45 comprises collecting the physical line data $CV, ES, SES, showtime, Resync, FI$ from multiple network elements 17, 19 of the network 11.

Furthermore, the method 45 includes collecting service quality information 49 describing a quality of service provided by each line 13 considered by the method 45. The service quality information 49 describes a quality of service perceived by the individual end users of the telecommunication lines 13. In the shown embodiment, the service quality information 49 is determined by a call centre or contact centre. However, any suitable means for collecting information about the quality of service may be applied. For example, the service quality information 49 may also be collected by using web-based forms that can be completed by the users.

Moreover, the method 45 may acquire operator data 51 describing the type of the service, (e. g. internet access, video-on-demand, Internet Protocol TV (IPTV), Voice over IP (VoIP), etc.) used on the individual lines 13. The operator data 51 may also include information specific to a service of a certain type such as type of video and/or audio codec, bit rate requirements or the amount of data to be transferred over the line 13.

The step 53 of the method 45 associates the service quality information 49 related to at least one particular line 13 with the physical line data 47 related to the same particular line 13. In the shown embodiment, step 53 is a tagging step that tags the pieces of physical line data 47 with the service quality information 49 related to the same line. Consequently, step 53 combines the physical line data 47 that may have been generated by means of measurements at least at a termination node 17, 19 with the service quality information 49 generated from customer feedback collected e. g. via a call centre. In an embodiment, the tagging step 53 also associates the operator data 51 related to the same particular line 13 with the physical line data 47. However, using the operator data 51 is optional. In another embodiment, the method 45 does not use the operator data 51.

In the shown embodiment, the service quality information 49 related to a particular line 13 is aggregated information that describes whether or not the customer is satisfied with the service or not. That is, the service quality information may comprise a binary value related to the individual lines 13 that describes the service quality.

A result of step 53 consists in tagged data 57 including the physical line data 47 associated with the service quality information 49 and optionally with the operator data 51. In the shown embodiment, the tagging 53 is implemented by physically adding the service quality information 49 and optionally the operator data 51 as a tag to the individual pieces of physical line data 47. However, in other embodiments any other suitable technical means for associating the physical line data 47, the service quality information 49 and optionally the operator data 51 related to this same line 13 with each other can be used. For example, the data 47, 49, 51 may be entered in a common database (not shown) and said associating may be implemented by relations and/or references stored in the database.

In an embodiment, the method 45 comprises a filtering block 61 for filtering the tagged data 57 to be used for a certain optimisation process 63, 65. The filtering block 61 may select only those tagged data 57 that include a certain physical characteristic and/or that are tagged with certain operator data 51. For example, the filtering block 61 may select tagged data 57 related to a certain type of service. Block 61 may even be more selective and restricting the selected data to a certain characteristic of the service such as the bit rate or type of codec, etc.

The shown exemplary method 45 includes two exemplary optimisation processes 63, 65 related to different stability metrics. Generally, a stability metric is a value calculated from one or more physical line characteristics that describe the level of stability of the line 13. Examples of stability metric are the Mean Time Between Errors (MTBE) and the Mean Time Between Resynchronisations (MTBR). A first optimisation process 63 determines thresholds $\Theta_u$, $\Theta_s$. The thresholds $\Theta_u$, $\Theta_s$ constitute decision criterion for classifying the individual lines 13 according to their stability. The thresholds $\Theta_u$, $\Theta_s$ are related to MTBE. In addition, the first optimisation process 63 calculates weights $w_{opt}=[w_1, w_2, w_3]$ to be used to calculate the performance metric MTBE. Both the thresholds $\Theta_u$, $\Theta_s$ as well as $w_{opt}$ are calculated depending on the physical line data 47, the service quality information 49 and optionally the operator data 51 rather than relying than empirical rules. In the shown embodiment, the first optimisation process uses the tagged data 57 that may optionally be filtered by the filtering block 61.

A second optimisation process 65 of the method 41 determines a further decision criterion related to another stability metric, i.e. the mean time between resynchronisations MTBR. Further thresholds $\Gamma_u$, $\Gamma_s$ constitute the further decision criterion related to the MTBR. In addition, the second optimisation process 65 determines further weights $s_{opt}$ $[s_1, s_2]$ to be used for calculating the stability metric MTBR.

Note that the present invention is not limited to the two exemplary optimisation processes 63, 65 and the related decision criterion. Instead of thresholds or in addition to the thresholds, any other type of decision criterion can be derived from the physical line data 47 with the associated quality information 49. For example, rules or algorithms may be automatically derived from the physical line data with the associated quality information. Moreover, the present invention is not limited to the stability metrics MTBE and MTBR. Any other stability metric can be applied. Furthermore, any other metric depending on the physical line data may be used.

In the following, the first optimisation process 63 is explained in more detail. An optional pre-processing block 67 processes the filtered tagged data 57. The processing by the pre-processing block 67 may include grouping the tagged data 57 belonging to the same time interval T, e. g. one day, or to filter over a minimum acceptable time interval T, to improve the reliability of the estimations.

A feature extraction block 69 determines the weights $w_{opt}$ as well as values of the stability metric MTBE associated with the service quality information 49 and optionally the operator data 51. In the shown embodiment, block 69 generates tagged values of the stability metric MTBE with the tag including pieces of the service quality information 49 and/or the operator data 51.

The stability metric MTBE may be calculated according to the following equation

$$MTBE = \frac{showtime(T)}{ErrorEvent(T)}, \qquad (1)$$

$$ErrorEvent(T) = w_1 CV(T) + w_2 ES(T) + w_3 SES(T)$$

The first feature extraction block 69 selects the weights $w_{opt} = [w_1, w_2, w_3]$ such that the stability metric MTBE allows making the most suitable distinction between stability classes.

In order to illustrate the effect of the selection of the weights $w_{opt}$ to the possibility to make a good distinction between the classes, a simple but suboptimal choice of the weights that might have been the result of empirical considerations, shall be considered. When using e.g. a weight vector $w_{opt} = [1, 0, 0]$ then the MTBE is calculated as follows

$$MTBE(24h) = \frac{showtime(24h)}{ErrorEvent(24h)}$$

$$ErrorEvent(24h) \qquad\qquad (2)$$
$$= [1,0,0] \cdot [CV_{ds}(24h), ES_{ds}(24h), SES_{ds}(24h)]'$$

Where the considered time interval is T = 1 day.

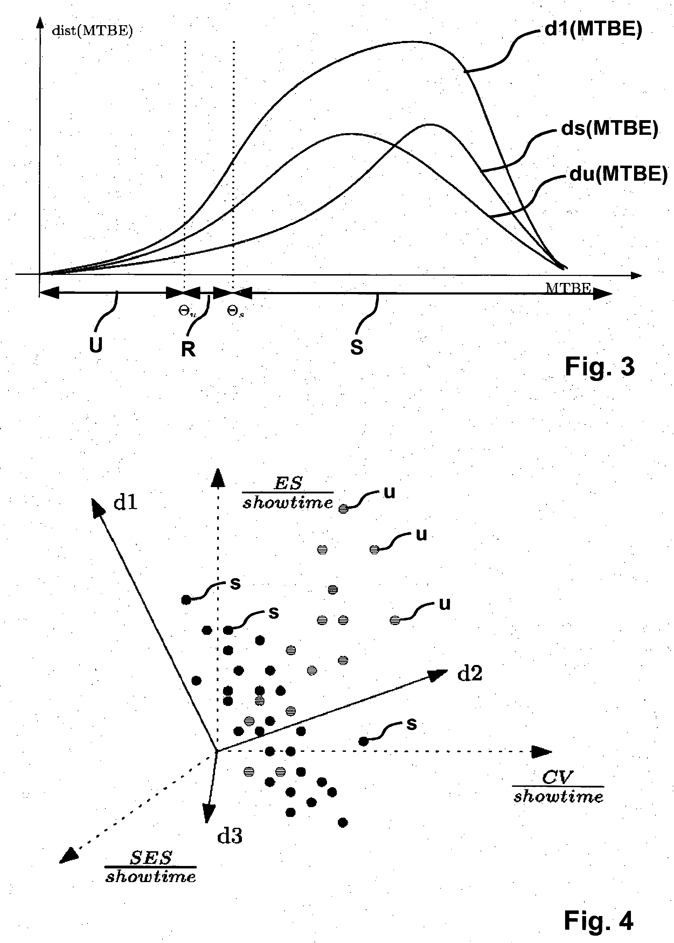

Figure 3 shows a distribution d1 (MTBE) of all lines 13 of a set of lines 13 in consideration. Furthermore, in the diagram of Figure 3, a distribution du(MTBE) of the stability metric MTBE of all lines having unsatisfactory service quality is shown.

Finally, Figure 3 shows the distribution ds(MTBE) of the stability metric MTBE of all lines of the set of lines that offer satisfactory service quality. Subdividing the individual values of MTBE and the related lines 13 into satisfactory service quality and unsatisfactory service quality is accomplished by analysing the service quality information 49. In the shown embodiment, this service quality information includes for each line of the set of lines the information on whether or not the line has satisfactory service quality. As a consequence, the individual pieces of physical line data 47 are tagged either with "unsatisfactory service quality" or "satisfactory service quality" so that the distributions du(MTBE) and ds(MTBE) can be calculated easily. In Figure 3, two exemplary values of a threshold $\theta_u$, $\theta_s$ are depicted. By comparing a value of the stability metric MTBE with the thresholds $\theta_u$, $\theta_s$, a decision can be made to which stability class of a plurality of stability classes a certain digital subscriber line 13 belongs. In all embodiments described herein in detail, three different stability classes are considered, i.e. unstable U, risky R, and stable S. However, in other embodiments another number of different stability classes may be used. In one embodiment, the method 45 comprises only two different stability classes, e. g. unstable U and stable S. In another embodiment, more than three different stability classes are considered.

As can be seen in Figure 3, when choosing the weights $w_{opt}$ as described above, there is a big overlap between the two distributions du(MTBE) and ds(MTBE). In particular, both distribution du(MTBE) and ds(MTBE) include infinite values of MTBE (no errors during the monitoring period). As a consequence, the stability classes U, R, S cannot be assigned accurately enough to individual values of the stability metric MTBE. In order to allow for more reliable and accurate assignment of the stability classes U, R, S to the individual lines or values of MTBE, the first feature extraction block 69 of the method 45 determines an optimum combination of physical line characteristics *CV, ES, SES* by appropriately determining the weight vector $w_{opt} = [w_1, w_2\ w_3]$ so that the most suitable distinction between the stability classes can be carried out.

In order to determine the optimum weight vector, the feature extraction block comprises a discriminant analysis, preferably a linear discriminant analysis. The principle of the discriminant analysis is illustrated in Figure 4. Figure 4 shows individual pieces of physical line data in a three-dimensional coordinate system. Pieces of physical line data tagged with "unsatisfactory" represented as hatched-points (some of them labelled with "u") and the pieces of physical line data tagged with "satisfactory" are drawn as solid black points (some of them labelled with "s"). The discriminant analysis comprises a coordinate transformation that maximises a discriminant measure. The transformed coordinate system (d1, d2, d3) is shown with solid line whereas the original coordinate system (CV, ES, SES) is shown with dashed lines. Thus, the feature extraction process 69 conceptually corresponds to a change of basis from the first basis or coordinate system (CV, ES, SES) to a second basis or coordinate system (d1, d2, d3). The change of basis or coordinate transformation corresponds to the optimum selection of the weight vector $w_{opt}$ by means of the discriminant analysis

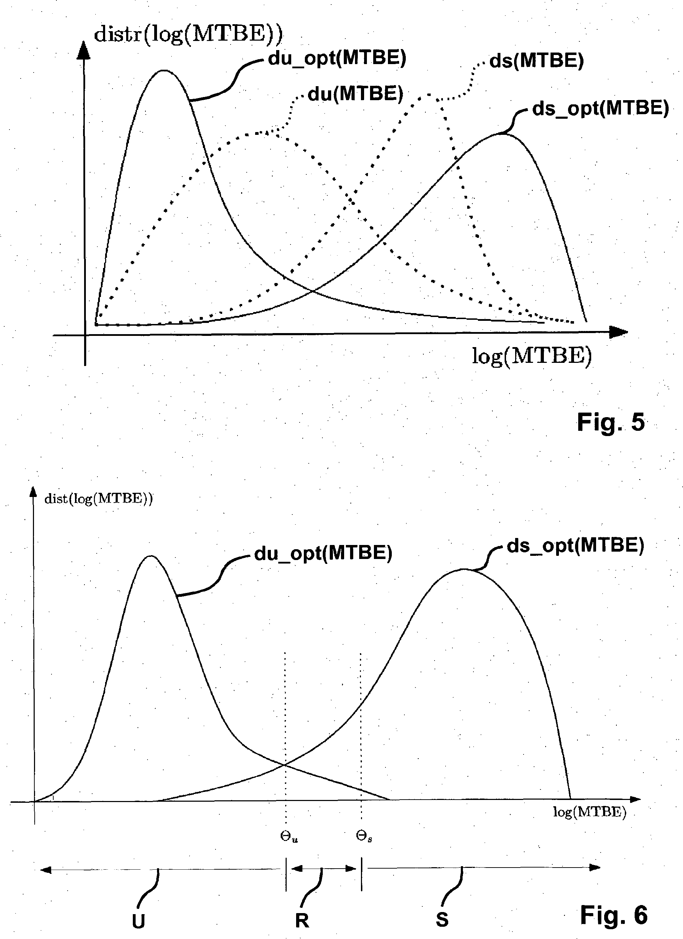

Figure 5 shows the distributions of the stability metric MTBE when using the optimum weight vector line $w_{opt}$. The distribution du_opt (MTBE) corresponds to the data tagged with "unsatisfactory". The distribution ds_opt (MTBE) corresponds to the data tagged with "satisfactory". The distributions du(MTBE) and ds(MTBE) related to the suboptimal choice of the weight vector $w_{opt}$ are shown with dotted line in Figure 5. The diagram of Figure 5 is in logarithmic scale.

Basically, determining the optimum weight vector $w_{opt}$ and the distribution of the stability metric MTBE according to the optimum weight vector $w_{opt}$ corresponds to a dimension transformation or reduction according to discriminant analysis, in particular linear discriminant analysis. Discriminant analysis is a well-known statistical method. Any suitable variant of discriminant analysis may be applied in block 69.

In an embodiment, the optimum weight vector $w_{opt}$ may be determined by minimizing the overlapping between the two distributions du(MTBE) and ds(MTBE). The overlapping is a discriminant measure used in the exemplary embodiment described herein. Consequently, the following optimization problem has to be solved:

$$MTBE_s = \frac{showtime}{w_1 CV + w_2 ES + w_3 SES} \quad \text{(tagged with "satisfied")}$$

$$MTBE_u = \frac{showtime}{w_1 CV + w_2 ES + w_3 SES} \quad \text{(tagged with "unsatisfied")}$$

$$\frac{1}{MTBE} = \frac{w_1 CV + w_2 ES + w_3 SES}{showtime}$$

$$\log\left(\frac{1}{MTBE}\right) = \log\left(w_1 \frac{CV}{showtime} + w_2 \frac{ES}{showtime} + w_3 \frac{SES}{showtime}\right) \quad (3)$$

$$-\log(MTBE) = \log\left(w_1 \frac{CV}{showtime} + w_2 \frac{ES}{showtime} + w_3 \frac{SES}{showtime}\right)$$

$$w_{opt} = \arg_w \max_X \left| \int_{-\infty}^{X} f_s(x)dx - \int_{-\infty}^{X} f_u(x)dx \right|,$$

$$\text{with } x = \log(MTBE), f(x) = distribution(x)$$

The difference of the two integrals in the above equation (3) characterizes the overlapping. The distributions $f_s$ and $f_u$ are determined for the stability metric $MTBE_s$ related to physical line data CV, ES, SES tagged with "satisfied" and for the stability metric $MTBE_u$ related to physical line data CV, ES, SES tagged with "unsatisfied", respectively.

In an embodiment, a fast implementation of such optimization process can be performed by a linear discriminant analysis directly with the CV/showtime, ES/showtime and SES/showtime values as input features by making use of the class-tagging for discrimination, as there is a monotonically relation between them and the term log (MTBE), as seen in equation (3). In another embodiment, any other suitable mathematical or statistical approach like quadratic discriminant analysis may be applied.

Based on the optimum weight $w_{opt}$ and the distributions du_opt(MTBE) and ds_opt(MTBE), a decision block 71 of the first optimisation process 63 determines the thresholds $\theta_u$, $\theta_s$. In the shown embodiment, the threshold $\theta_u$ is defined as being the MTBE-value where the two distributions du_opt(MTBE) and ds_opt(MTBE) intersect. Accordingly, the $\theta_u$ is shown in Figure 6 at a value for MTBE where du, opt (MTBE) = ds, opt (MTBE). The other threshold $\theta_s$ could be chosen to guarantee for instance, that 95 % of the unsatisfactory lines are reported as not stable. Instead of 95 %, any other percentile can be applied. Mathematically, this is expressed e.g. as follows:

$$\Theta_u = \arg_x f_u(x) \cap f_s(x), \quad \text{with } f(x) = distribution(MTBE)$$

$$\Theta_s = X \in R : \frac{\int_{-\infty}^{X} f_u(x)dx}{\int_{-\infty}^{+\infty} f_u(x)dx} = 0.95, \quad \text{with } f(x) = distribution(MTBE) \quad (4)$$

As can be seen on Figure 2, the generic concept explained above in connection with the stability metric MTBE which the first optimization process 63 is based, can also applied to the stability metric MTBR in the second optimisation process 65 accordingly. In other words, this second stability metric MTBR may also involved in the evaluation of the line stability and has an impact on the quality of the end user experience, i.e. the quality of service perceived by the end user.

The second optimization process 65 has the same structure as the first optimization process 63. In the shown embodiment, the stability metric MTBR is calculated from the number of resynchronisations *Resync* and/or the number of failed initialisations *FI*. Consequently, the filtering block 61 selects those pieces of physical line data 47 that include information about the number of resynchronisations and/or the number of failed initialisation for the second optimization process 65. In addition, the filtering block 61 selects those pieces of physical line data 47 containing information about the number of coding violations, the number of error seconds or the number of several error seconds for usage by the first optimization process 63.

The second optimization process having the same structure as the first optimization process 63 includes a pre-processing block 67, a feature extraction block 69 and a decision block 71. The second optimization process 65 differs from the first optimization process 63 in that different physical line data *Resync, FI* are used and the further thresholds $\Gamma_u$, $\Gamma_s$ as well as the further weights $s_{opt} = [s_1, s_2]$ are calculated. The feature extraction block 69 of the second optimization process 65 applies the same approach as the feature extraction block 69 of the first optimization process 63 but different parameters *Resync, FI* are used as the physical line data 47 and a different stability metric MTBR is used. However the same algorithms, e.g. the linear or non-linear discriminant analysis may be applied in the same manner as in the feature extraction block of the first optimization process. The stability metric MTBR may be calculated using the further weight vector $s_{opt}$ calculated in the feature extraction block 69 of the second optimization process 65:

$$MTBR(T) = \frac{showtime}{ResyncEvents} = \frac{showtime}{s_1 \cdot Resync + s_2 \cdot FI} \qquad (5)$$

When using multiple stability metrics MTBE, MTBR, a decision criterion related to these multiple stability metrics can be determined. These threshold-based decision criterion may be expressed as follows:

$$
\begin{array}{llll}
\text{STABLE:} & MTBE(T) > \Theta_s & \text{and} & MTBR(T) > \Gamma_s \\
\text{RISKY:} & \Theta_s > MTBE(T) > \Theta_u & \text{or} & \Gamma_s > MTBR(T) > \Gamma_u \quad (6) \\
\text{UNSTABLE:} & MTBE(T) < \Theta_u & \text{or} & MTBR(T) < \Gamma_u
\end{array}
$$

Instead of using multiple decision criteria simultaneously, as in equation (6), in another embodiment, one decision criteria may be selected based on additional information. The addition information may be provided by the customer. For example, the additional information may include a reason for a customer's complaint. That is, not only the classification provided by the end user of the line (relying on either "satisfactory" or "unsatisfactory") but also a reason of the end user feedback may be used by the method 45. Accordingly, a division of the problematic lines 13 according to this reason can be performed. For example, when the customer complains mainly about the repetitive amount of resynchronisation but is satisfied by the bit rate or quality of service, when the service is available, then the method 41 may apply the first optimization process 61 based on the MTBE metric. By contrast, when the end-user complains about e. g. the presence of artefacts in the IPTV service or about low throughputs when downloading data, but is not annoyed by repetitive resynchronisations, the method 45 may apply the second optimization process 65 based on the MTBR stability metric. Selecting the stability metric MTBE, MTBR and the respective optimization process 63, 65 based on the additional information further improves the accuracy of the method 45.

In order to further improve the optimization process 63, 65, the processes 63, 65 may be selected according to the type of service offered to the end user or actually used by the end user. In an embodiment, the filtering block 61 may filter on either the high speed internet end users only or end users that use IPTV, as the quality of service constraints for these different types of services are fundamentally different. A more advanced distinction could even make use of the upper-protocol information, if such information is available.

The present invention has been explained by embodiments related to exemplary parameters such as the stability metrics MTBE, MTBR and the physical line characteristics show time, *CV, ES, SES, Resync,* and *FI*. However, the present invention is not limited to these parameters or stability metrics. The embodiments described herein use these parameters because they are currently available in existing dynamic line management approaches. However, if in future implementations of dynamic line managements, new parameters presenting a potential relation with a quality of experience, get available, they may take part of the above-described equations and optimization approaches. In particular, the approach described above in connection with the stability metrics MTBE or MTBR may be applied accordingly to a further stability metric by replacing in the above equations or description the respective stability metric MTBE; MTBR and the respective physical line parameters *CV, ES, SES; Resync, FI* with the further stability metric and the physical line parameters on which the further stability metric depends. Thus, a further optimization process related to the further stability metric may be added to the method 45. In an embodiment the further optimization process is used instead of the first optimization process 63 and/or the second optimization process 65.

To sum up, the method 45 described herein uses feedback information about the quality of service perceived by the end users in order to derive at least one decision criterion for deciding on whether a telecommunication line is stable or unstable. Preferably, the method 45 optimizes the computing of the stability metrics, e. g. by determining weight vectors $w_{opt}$, $s_{opt}$. Furthermore, the method 45 may provide a decision criterion in the form of at least one threshold $\theta_u$, $\theta_s$, $\Gamma_u$, $\Gamma_s$ related to at least one stability metric MTBR, MTBE which constitute at least one decision criterion for determining whether or not the line is stable. Using these at least one decision criterion allows for more accurate assessment of the stability of the individual telecommunication lines 13 and therefore allows to improve the efficiency and the throughput of the access network 11.

**Claims**

1. Method (45) for evaluating the stability of communication over a telecommunication line (13), the method (45) comprising

   - ascertaining physical line data (47) characterizing a physical characteristic (CV, ES, SES; Resync, FI) of each line (13) of a fist set of subscriber lines including the telecommunication line ;
   - collecting service quality information (49) describing a quality of a service provided over each line (13) of a second set of subscriber lines and perceived by end users of said line as satisfactory or unsatisfactory ;
   - associating (53) the service quality information (47) related to at least one particular line (13) with the physical line data related to the same particular line (13); and
   - determining (63, 65) at least one threshold ($\Theta_u$, $\Theta_s$, $\Gamma_u$, $\Gamma_s$) for deciding to which stability class (S, R, U) of a plurality of stability classes (S, R, U) the digital subscriber line (13) belongs;

   **characterized in that** the method comprises

   - calculating the at least one threshold ($\Theta_u$, $\Theta_s$, $\Gamma_u$, $\Gamma_s$) for a stability metric (MTBE; MTBR) of the line (13), the at least one threshold ($\Theta_u$, $\Theta_s$, $\Gamma_u$, $\Gamma_s$) depending on the physicalline data (47) with associated service quality information (49) and the stability metric depending on multiple physical characteristics (CV, ES, SES, Resync, FI) of the line (13); and defining said at least one threshold as anyone of an intersection point of the distributions representing said stability metrics (MTBE, MTBR) for satisfactory and unsatisfactory lines or as a percentile of the distribution representing said stability metrics (MTBE, MTBR) for unsatisfactory lines; and
   - adapting a calculation rule ($w_{opt}$, $s_{opt}$) for calculating the stability metric (MTBE, MTBR) such that a discriminant measure of the stability metric related to the service quality information (49) is optimized, wherein said calculation rule includes a linear combination of said multiple physical characteristics (CV, ES, SES; Resync, FI) and said adapting the calculation rule includes computing weight coefficients ($w_{opt}$, $s_{opt}$) for said linear combination such that said deciding is optinlized.

2. Method (45) according to claim 1, wherein the plurality of stability classes corresponds to three classes: a class of stable lines (S), a class of risky lines (R) and a class of unstable lines (U).

3. Method (45) according to claim 2, wherein the method (45) comprises calculating (71) at least one pair ($\Theta_u$, $\Theta_s$, $\Gamma_u$, $\Gamma_s$) of thresholds and wherein the deciding to which stability class (S, R, U) the line (13) belongs comprises comparing the stability metric (MTBE, MTBR) with each threshold ($\Theta_u$, $\Theta_s$; $\Gamma_u$, $\Gamma_s$) of the pair of thresholds.

4. Method (45) according to one of the precedent claims, wherein the service quality information (49) comprises an indication on whether or not the quality of service provided by the respective line (13) is satisfactory.

5. Method (45) according to one of the precedent claims, wherein the service quality information (49) is based on customer feedback.

6. Method (45) according to claim 5, wherein the method (45) comprises calculating the at least one weight coefficient ($w_{opt}$, $s_{opt}$) depending on the physical line data (47) with associated quality information.

7. Device (25, 31,43) for monitoring the stability of communication over a telecommunication line (13), device (25, 31,43) being operable for

   - ascertaining physical line data (47) characterizing a physical characteristic (CV, ES, SES; Resync, FI) of each line (13) of a fist set of subscriber lines including the telecommunication line ;
   - collecting service quality information (49) describing a quality of a service provided over each line (13) of a second set of subscriber lines and perceived by end users of said lines as satisfactory or unsatisfactory;
   - associating (53) the service quality information (47) related to at least one particular line (13) with the physical line data related to the same particular line (13); and

- determining (63, 65) at least one threshold ($\Theta_u$, $\Theta_s$, $\Gamma_u$, $\Gamma_s$) for deciding to which stability class (S, R, U) of a plurality of stability classes (S, R, U) the digital subscriber line (13) belongs;

**characterized in that** the device is operable for

- calculating the at least one threshold ($\Theta_u$, $\Theta_s$, $\Gamma_u$, $\Gamma_s$) for a stability metric (MTBE, MTBR) of the line (13), the at least one threshold ($\Theta_u$, $\Theta_s$, $\Gamma_u$, $\Gamma_s$) depending on the physical line data (47) with associated service quality information (49) and the stability metric depending on multiple physical characteristics (CV, ES, SES, Resync, FI) of the line (13); and defining said at least one threshold as anyone of an intersection point of the distributions representing said stability tnetrics (MTBE, MTBR) for satisfactory and unsatisfactory lines or as a percentile of the distribution representing said stability metrics (MTBE, MTBR) for unsatisfactory lines; and
- adapting a calculation rule ($w_{opt}$, $s_{opt}$) for calculating the stability metric (MTBE, MTBR) such that a discriminant measure of the stability metric related to the service quality information (49) is optimized, wherein said calculation rule includes a linear combination of said multiple physical characteristics (CV, ES, SES; Resync, FI) and said adapting the calculation rule includes computing weight coefficients ($w_{opt}$, $s_{opt}$) for said linear combination such that said deciding is optimized.

8. Device (25, 31, 43) according to claim 7, wherein the device (25, 31, 43) is operable, preferably programmed, for executing a method (45) according to one of claims 1 to 6.

9. Monitoring station (39) for monitoring the stability of communication over a telecommunication line, wherein the monitoring station comprises a device (43) according to claim 7 or 8.

10. Computer program product, preferably a computer readable storage medium (29), comprising a computer program that is programmed for executing a method (45) according to one of claims 1 to 6 when run on a computer.

**Patentansprüche**

1. Verfahren (45) zur Bewertung der Stabilität der Kommunikation über eine Telekommunikationsleitung (13), wobei das Verfahren (45) Folgendes umfasst:

- Ermitteln von physikalischen Leitungsdaten (47), die ein physikalisches Merkmal (CV, ES, SES; Resync, FI) jeder Leitung (13) einer ersten Reihe von Teilnehmerleitungen, einschließlich der Telekommunikationsleitung, kennzeichnen;
- Sammeln von Dienstgüteinformationen (49), die eine Güte eines Dienstes beschreiben, der über jede Leitung (13) einer zweiten Reihe von Teilnehmerleitungen bereitgestellt wird und von Endbenutzern der besagten Leitungen als zufriedenstellend oder nicht zufriedenstellend empfunden wird;
- Zuordnen (53) der Dienstgüteinformationen (47) bezogen auf mindestens eine bestimmte Leitung (13) zu den physikalischen Leitungsdaten bezogen auf die gleiche bestimmte Leitung (13); und
- Bestimmen (63, 65) mindestens eines Grenzwerts ($\Theta_u$, $\Theta_s$, $\Gamma_u$, $\Gamma_s$) zum Entscheiden, zu welcher Stabilitätsklasse (S, R, U) von einer Vielzahl von Stabilitätsklassen (S, R, U) die digitale Teilnehmerleitung (13) gehört;

**dadurch gekennzeichnet, dass** das Verfahren Folgendes umfasst:

- Berechnen des mindestens einen Grenzwerts ($\Theta_u$, $\Theta_s$, $\Gamma_u$, $\Gamma_s$) für eine Stabilitätsmetrik (MTBE, MTBR) der Leitung (13), wobei der mindestens eine Grenzwert ($\Theta_u$, $\Theta_s$, $\Gamma_u$, $\Gamma_s$) von den physikalischen Leitungsdaten (47) mit zugeordneten Dienstgüteinformationen (49) abhängt und die Stabilitätsmetrik von mehreren physikalischen Merkmalen (CV, ES, SES, Resync, FI) der Leitung (13) abhängt; und Definieren des besagten mindestens einen Grenzwerts als beliebigen Schnittpunkt der Verteilungen, welche die besagten Stabilitätsmetriken (MTBE, MTBR) für zufriedenstellende und nicht zufriedenstellende Leitungen darstellen, oder als Perzentil der Verteilung, welche die besagten Stabilitätsmetriken (MTBE, MTBR) für nicht zufriedenstellende Leitungen darstellt; und
- Anpassen einer Rechenregel ($w_{opt}$, $s_{opt}$) zum Berechnen der Stabilitätsmetrik (MTBE, MTBR), so dass ein Diskriminanzmaß der Stabilitätsmetrik bezogen auf die Dienstgüteinformationen (49) optimiert wird, wobei

besagte Rechenregel eine Linearkombination von besagten mehreren physikalischen Merkmalen (CV, ES, SES; Resync, FI) umfasst und besagtes Anpassen der Rechenregel das Kalkulieren von Gewichtungsfaktoren ($w_{opt}$, $s_{opt}$)

für besagte Linearkombination umfasst, so dass besagtes Entscheiden optimiert wird.

2. Verfahren (45) nach Anspruch 1, wobei die Vielzahl von Stabilitätsklassen drei Klassen entspricht: eine Klasse von stabilen Leitungen (S), eine Klasse von riskanten Leitungen (R) und eine Klasse von unstabilen Leitungen (U).

3. Verfahren (45) nach Anspruch 2, wobei das Verfahren (45) das Berechnen (71) von mindestens einem Paar ($\Theta_u$, $\Theta_s$; $\Gamma_u$, $\Gamma_s$) von Grenzwerten umfasst und wobei das Entscheiden, zu welcher Stabilitätsklasse (S, R, U) die Leitung (13) gehört, das Vergleichen der Stabilitätsmetrik (MTBE, MTBR) mit jedem Grenzwert ($\Theta_u$, $\Theta_s$; $\Gamma_u$, $\Gamma_s$) des Paars von Grenzwerten umfasst.

4. Verfahren (45) nach einem der vorstehenden Ansprüche, wobei die Dienstgüteinformationen (49) eine Angabe darüber umfassen, ob die Güte des Dienstes, der von der jeweiligen Leitung (13) bereitgestellt wird, zufriedenstellend ist oder nicht.

5. Verfahren (45) nach einem der vorstehenden Ansprüche, wobei die Dienstgüteinformationen (49) auf Kundenrückmeldungen basieren.

6. Verfahren (45) nach Anspruch 5, wobei das Verfahren (45) das Berechnen des mindestens einen Gewichtungsfaktors ($w_{opt}$, $s_{opt}$) in Abhängigkeit von den physikalischen Leitungsdaten (47) mit zugeordneten Güteinformationen umfasst.

7. Vorrichtung (25, 31, 43) zum Überwachen der Stabilität der Kommunikation über eine Telekommunikationsleitung (13), wobei die Vorrichtung (25, 31, 43) betriebsfähig ist zum

- Ermitteln von physikalischen Leitungsdaten (47), die ein physikalisches Merkmal (CV, ES, SES; Resync, FI) jeder Leitung (13) einer ersten Reihe von Teilnehmerleitungen, einschließlich der Telekommunikationsleitung, kennzeichnen;
- Sammeln von Dienstgüteinformationen (49), die eine Güte eines Dienstes beschreiben, der über jede Leitung (13) einer zweiten Reihe von Teilnehmerleitungen bereitgestellt wird und von Endbenutzern der besagten Leitungen als zufriedenstellend oder nicht zufriedenstellend empfunden wird;
- Zuordnen (53) der Dienstgüteinformationen (47) bezogen auf mindestens eine bestimmte Leitung (13) zu den physikalischen Leitungsdaten bezogen auf die gleiche bestimmte Leitung (13); und
- Bestimmen (63, 65) mindestens eines Grenzwerts ($\Theta u$, $\Theta_s$, $\Gamma_u$, $\Gamma_s$) zum Entscheiden, zu welcher Stabilitätsklasse (S, R, U) von einer Vielzahl von Stabilitätsklassen (S, R, U) die digitale Teilnehmerleitung (13) gehört;

**dadurch gekennzeichnet, dass** die Vorrichtung betriebsfähig ist zum

- Berechnen des mindestens einen Grenzwerts ($\Theta_u$, $\Theta_s$, $\Gamma_u$, $\Gamma_s$) für eine Stabilitätsmetrik (MTBE, MTBR) der Leitung (13), wobei der mindestens eine Grenzwert ($\Theta_u$, $\Theta_s$, $\Gamma_u$, $\Gamma_s$) von den physikalischen Leitungsdaten (47) mit zugeordneten Dienstgüteinformationen (49) abhängt und die Stabilitätsmetrik von mehreren physikalischen Merkmalen (CV, ES, SES, Resync, FI) der Leitung (13) abhängt; und Definieren des besagten mindestens einen Grenzwerts als beliebigen Schnittpunkt der Verteilungen, welche die besagten Stabilitätsmetriken (MTBE, MTBR) für zufriedenstellende und nicht zufriedenstellende Leitungen darstellen, oder als Perzentil der Verteilung, welche die besagten Stabilitätsmetriken (MTBE, MTBR) für nicht zufriedenstellende Leitungen darstellt; und
- Anpassen einer Rechenregel ($w_{opt}$, $s_{opt}$) zum Berechnen der Stabilitätsmetrik (MTBE, MTBR), so dass ein Diskriminanzmaß der Stabilitätsmetrik bezogen auf die Dienstgüteinformationen (49) optimiert wird, wobei

besagte Rechenregel eine Linearkombination von besagten mehreren physikalischen Merkmalen (CV, ES, SES; Resync, FI) umfasst und besagtes Anpassen der Rechenregel das Kalkulieren von Gewichtungsfaktoren ($w_{opt}$, $s_{opt}$) für besagte Linearkombination umfasst, so dass besagtes Entscheiden optimiert wird.

8. Vorrichtung (25, 31, 43) nach Anspruch 7, wobei die Vorrichtung (25, 31, 43) betriebsfähig ist, vorzugsweise programmiert, um ein Verfahren (45) nach einem der Ansprüche 1 bis 6 auszuführen.

9. Überwachungsstation (39) zum Überwachen der Stabilität der Kommunikation über eine Telekommunikationsleitung, wobei die Überwachungsstation eine Vorrichtung (43) nach Anspruch 7 oder 8 umfasst.

10. Computerprogrammprodukt, vorzugsweise ein computerlesbares Speichermedium (29), umfassend ein Computerprogramm, das programmiert ist, um ein Verfahren (45) nach einem der Ansprüche 1 bis 6 auszuführen, wenn es auf einem Computer läuft.

**Revendications**

1.  Procédé (45) pour évaluer la stabilité de communication sur une ligne de télécommunication (13), le procédé (45) comprenant les étapes suivantes :

    - identifier des données de ligne physique (47) caractérisant une caractéristique physique (CV, ES, SES ; Resync, FI) de chaque ligne (13) d'un premier ensemble de lignes d'abonné comprenant la ligne de télécommunication ;
    - recueillir des informations sur la qualité de service (49) décrivant une qualité d'un service fournie sur chaque ligne (13) parmi un deuxième ensemble de lignes d'abonné et considérée par les utilisateurs finaux desdites lignes comme satisfaisante ou non insatisfaisante ;
    - associer (53) les informations sur la qualité de service (47) liées à au moins une ligne particulière (13) aux données de ligne physique liées à la même ligne particulière (13) ; et
    - déterminer (63, 65) au moins un seuil ($\Theta_u$, $\Theta_s$, $\Gamma_u$, $\Gamma_s$) pour décider, parmi une pluralité de classes de stabilité (S, R, U), à quelle classe de stabilité (S, R, U) appartient la ligne d'abonné numérique (13) ;

    **caractérisé en ce que** le procédé comprend les étapes suivantes

    - calculer l'au moins un seuil ($\Theta$u, $\Theta$s, $\Gamma$u, $\Gamma$s) pour une mesure de stabilité (MTBE, MTBR) de la ligne (13), l'au moins un seuil ($\Theta$u, $\Theta$s, $\Gamma$u, $\Gamma$s) dépendant des données de ligne physique (47) auxquelles sont associées les informations sur la qualité de service (49) et la mesure de stabilité dépendant de caractéristiques physiques multiples (CV, ES, SES, Resync, FI) de la ligne (13) ; et définir ledit au moins un seuil comme l'un quelconque parmi un point d'intersection des distributions représentant lesdites mesures de stabilité (MTBE, MTBR) pour des lignes satisfaisantes et non satisfaisantes et un percentile de la distribution représentant lesdites mesures de stabilité (MTBE, MTBR) pour des lignes non satisfaisantes ; et
    - adapter une règle de calcul ($w_{opt}$, $s_{opt}$) pour calculer la mesure de stabilité (MTBE, MTBR) de sorte qu'une mesure discriminante de la mesure de stabilité liée aux informations sur la qualité de service (49) soit optimisée, dans lequel ladite règle de calcul comprend une combinaison linéaire desdites caractéristiques physiques multiples (CV, ES, SES ; Resync, FI), et ladite adaptation de la règle de calcul comprend le calcul de coefficients de pondération ($w_{opt}$, $s_{opt}$) pour ladite combinaison linéaire de sorte que ladite décision soit optimisée.

2.  Procédé (45) selon la revendication 1, dans lequel la pluralité de classes de stabilité correspond à trois classes : une classe de lignes stables (S), une classe de lignes à risque (R) et une classe de lignes instables (U).

3.  Procédé (45) selon la revendication 2, dans lequel le procédé (45) comprend le calcul (71) d'au moins une paire ($\Theta$u, $\Theta$s ; $\Gamma$u, $\Gamma$s) de seuils et dans lequel la décision consistant à déterminer à quelle classe de stabilité (S, R, U) appartient la ligne (13) comprend la comparaison de la mesure de stabilité (MTBE, MTBR) avec chaque seuil ($\Theta$u, $\Theta$s ; $\Gamma$u, $\Gamma$s) de la paire de seuils.

4.  Procédé (45) selon l'une des revendications précédentes, dans lequel les informations sur la qualité de service (49) comprennent une indication sur le fait que la qualité de service fournie par la ligne respective (13) est satisfaisante.

5.  Procédé (45) selon l'une des revendications précédentes, dans lequel les informations sur la qualité de service (49) sont basées sur un retour client.

6.  Procédé (45) selon la revendication 5, dans lequel le procédé (45) comprend le calcul de l'au moins un coefficient de pondération ($w_{opt}$, $s_{opt}$) en fonction des données de ligne physique (47) auxquelles sont associées des informations sur la qualité.

7.  Dispositif (25, 31, 43) pour surveiller la stabilité de communication sur une ligne de télécommunication (13), le dispositif (25, 31, 43) pouvant être utilisé pour

    - identifier des données de ligne physique (47) caractérisant une caractéristique physique (CV, ES, SES ; Resync, FI) de chaque ligne (13) d'un premier ensemble de lignes d'abonné comprenant la ligne de télécommunication ;

- recueillir des informations sur la qualité de service (49) décrivant une qualité d'un service fournie sur chaque ligne (13) parmi un deuxième ensemble de lignes d'abonné et considérée par les utilisateurs finaux desdites lignes comme satisfaisante ou non insatisfaisante ;

- associer (53) les informations sur la qualité de service (47) liées à au moins une ligne particulière (13) aux données de ligne physique liées à la même ligne particulière (13) ; et pour

- déterminer (63, 65) au moins un seuil (Θu, Θs, Γu, Γs) pour décider, parmi une pluralité de classes de stabilité (S, R, U), à quelle classe de stabilité (S, R, U) appartient la ligne d'abonné numérique (13) ;

**caractérisé en ce que** le dispositif peut être utilisé pour

- calculer l'au moins un seuil (Θu, Θs, Γu, Γs) pour une mesure de stabilité (MTBE, MTBR) de la ligne (13), l'au moins un seuil (Θu, Θs, Γu, Γs) dépendant des données de ligne physique (47) auxquelles sont associées les informations sur la qualité de service (49) et la mesure de stabilité dépendant de caractéristiques physiques multiples (CV, ES, SES, Resync, FI) de la ligne (13) ; et définir ledit au moins un seuil comme l'un quelconque parmi un point d'intersection des distributions représentant lesdites mesures de stabilité (MTBE, MTBR) pour des lignes satisfaisantes et non satisfaisantes et un percentile de la distribution représentant lesdites mesures de stabilité (MTBE, MTBR) pour des lignes non satisfaisantes ; et

- adapter une règle de calcul ($w_{opt}$, $s_{opt}$) pour calculer la mesure de stabilité (MTBE, MTBR) de sorte qu'une mesure discriminante de la mesure de stabilité liée aux informations sur la qualité de service (49) soit optimisée, dans lequel ladite règle de calcul comprend une combinaison linéaire desdites caractéristiques physiques multiples (CV, ES, SES ; Resync, FI) et

ladite adaptation de la règle de calcul comprend le calcul de coefficients de pondération ($w_{opt}$, $s_{opt}$) pour ladite combinaison linéaire de sorte que ladite décision soit optimisée.

8. Dispositif (25, 11, 43) selon la revendication 7, dans lequel le dispositif (25, 31, 43) peut être utilisé, et de préférence programmé, pour exécuter un procédé (45) selon l'une des revendications 1 à 6.

9. Station de surveillance (39) pour surveiller la stabilité de communication sur une ligne de télécommunication, la station de surveillance comprenant un dispositif (43) selon la revendication 7 ou 8

10. Produit de programme informatique, de préférence un support de stockage lisible par ordinateur (29), comprenant un programme informatique qui est programmé pour exécuter un procédé (45) selon l'une des revendications 1 à 6 lorsqu'il est exécuté sur un ordinateur.

**Fig. 1**

Fig. 2

Fig. 3

Fig. 4

Fig. 5

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **F. FESSANT et al.** A Complete Data Mining process to Manage the QoS of ADSL Services. *WAITS,* 28 August 2012